# EUROPÄISCHE PATENTSCHRIFT

(11) **EP 2 343 969 B1**
(45) Veröffentlichungstag und Bekanntmachung des Hinweises auf die Patenterteilung: **08.10.2014**
(21) Anmeldenummer: 09796800.2
(22) Anmeldetag: 08.12.2009
(51) Int. Cl.: A01K 63/04, A01K 61/00, A01K 63/00

(54) **INDOOR-FISCHFARM MIT AUFGESTÄNDERTEM BECKEN**
INDOOR FISHFARM WITH RAISED TANK
FERME PISCICOLE COUVERTE À BASSINS SURÉLEVÉS

(30) Priorität: 08.10.2008 DE 202008013223 U
(43) Veröffentlichungstag der Anmeldung: 20.07.2011
(73) Patentinhaber: Big Dutchman International GmbH, 49377 Vechta (DE)
(72) Erfinder: BÖER, Marco, 49429 Visbek-Varnhorn (DE); GRITZKA, Torsten, 49377 Vechta (DE)
(74) Vertreter: Eisenführ Speiser
(86) Internationale Anmeldenummer: PCT/IB2009/007694
(87) Internationale Veröffentlichungsnummer: WO 2010/041153

(56) Entgegenhaltungen:
- WO-A1-01/01765
- WO-A1-93/21760
- WO-A2-2006/096910
- DE-A1- 3 827 713
- DE-A1- 19 847 027
- DE-A1-102006 019 741
- DE-A1-102007 002 584
- US-B1- 6 499 431

## Beschreibung

Die Erfindung betrifft ein Indoor-Fischbecken, umfassend Wände und Böden, welche einen Beckenbehälter definieren, in dem ein Fischaufenthaltsbereich, ein Sedimentationsbereich, der über zumindest eine Öffnung mit dem Fischaufenthaltsbereich so verbunden ist, dass Wasser, insbesondere Wasser aus einem bodennahen Bereich, aus dem Fischaufenthaltsbereich in den Sedimentationsbereich strömen kann, und ein Bioreaktorbereich, der über zumindest eine Öffnung mit dem Fischaufenthaltsbereich so verbunden ist, dass Wasser, insbesondere Wasser aus einem oberflächennahen Bereich aus dem Bioreaktorbereich in den Fischaufenthaltsbereich strömen kann, ausgebildet ist.

Überfischung und Umwelteinflüsse haben weltweit zu einer Stagnation der Erträge der Fischerei geführt, in einigen Fischarten sind die Fischerträge sogar rückläufig. Ein erfolgversprechender Ansatz zur Schonung der natürlichen Fischbestände besteht in der Fischaufzucht in Aquakulturen. Hierbei wird zwischen extensiven und intensiven Aquakulturen unterschieden, wobei die intensiven Aquakulturen aufgrund der künstlichen Fütterung höhere Erträge liefern können als die extensiven Aquakulturen.

Als Aquakulturverfahren sind derzeit die Teichwirtschaft, Rinnenanlagen und die Netzgehegehaltung in wirtschaftlich nennenswertem Umfang in Gebrauch. Allerdings weisen diese Formen von Aquakulturen jeweils spezifische Probleme auf, die einerseits in genehmigungsrechtlichen Ursachen und andererseits in dem Erfordernis der permanenten Frischwasserzufuhr (bei Rinnenanlagen) bzw. dem permanenten Austrag von Fischkot und Futterresten in die natürliche Umgebung (bei Netzgehegehaltung) liegen.

Seit mehreren Jahren werden daher Aquakulturen entwickelt, die als Kreislaufanlage konzipiert sind. Diese Kreislaufanlagen werden auch als Indoor-Fischfarmen bezeichnet und zeichnen sich dadurch aus, dass die Fischaufzucht innerhalb eines quasi geschlossenen Wasserkreislaufs erfolgt. Dabei ist zu verstehen, dass Fischbecken solcher Kreislaufanlagen vorzugsweise innerhalb von Gebäuden aufgestellt werden, jedoch eine Anwendung der Indoor-Fisch-Aufzuchttechnik in solchen Kreislaufanlagen auch unter freiem Himmel erfolgen könnte.

Aus DE 195 21 037, deren Offenbarungsgehalt im Wege der Bezugnahme vollständig in den Offenbarungsgehalt dieser Beschreibung einbezogen wird, ist ein Becken zur Fischzucht bekannt, welches sich für die Intensivhaltung von Fischen in Form einer Kreislaufanlage eignet. Aus technischer Sicht als wichtige Aspekte eines solchen Fischbeckens sind der Bioreaktorbereich und der Sedimentationsbereich zu betrachten. Im Sedimentationsbereich werden Feststoffe sedimentiert und aus dem Kreislauf entfernt, was eine geringe Frischwasserzufuhr in den (quasi-) geschlossenen Kreislauf zur Kompensation erforderlich macht. Im Reaktorbereich wird mittels einer fein verteilten Belüftung dem Haltungswasser Sauerstoff zugeführt und es erfolgt durch darin befindliche Mikroorganismen ein intensiver Abbau der organischen Stoffe.

Fischbecken dieser Art eignen sich prinzipiell gut für eine Kreislauf-Aquakultur. Allerdings besteht Verbesserungsbedarf dahingehend, dass die Bewirtschaftung dieser Fischbecken in größeren Fischfarmen in einer effizienteren Weise ermöglicht wird und insbesondere Wartungsarbeiten an dem Fischbecken erleichtert werden.

Weiterhin besteht ein Bedarf für Fischbecken, die sich in kostengünstigerer Weise installieren lassen als vorbekannte Fischbecken.

Schließlich besteht ein Bedarf für Indoor-Fischbecken, die eine erleichterte Abfischung der Fische ermöglicht.

Diese und andere Probleme des Standes der Technik werden gemäß der Erfindung durch ein Indoor-Fischbecken der eingangs genannten Art gelöst, indem eine Rahmenkonstruktion bereitgestellt wird, welche die technischen Merkmale der kennzeichnenden Teils des unabhängigen Anspruchs 1 aufweist.

Das erfindungsgemäße Indoor-Fischbecken erzielt mit Hilfe der Rahmenkonstruktion eine Aufständerung des gesamten Fischbeckens, die es ermöglicht, dass wesentliche oder alle mit Wasser gefüllten Bereiche oberhalb des Gebäudebodens liegen, auf dem die Rahmenkonstruktion aufgestellt ist. Hierdurch entfallen einerseits kostspielige Aushubarbeiten und Fundamentierungsarbeiten bei der Installation des Fischbeckens. Zudem wird die Zugänglichkeit des Fischbeckens von außerhalb dahingehend verbessert, als dass alle oder wesentliche Außenwandbereiche des Fischbeckens aufgrund dessen aufgeständerter Anordnung für Wartungs- und Servicearbeiten zugänglich sind, was den Betrieb und die Schadensbehebung erheblich verbessert. Insbesondere ermöglicht die Aufständerung des Fischbeckens, dass eine Indoor-Fischfarm in einem bereits bestehendem Gebäude angeordnet wird, ohne dass der dortige Boden verändert, ausgehoben oder dergleichen angepasst werden muss. Stattdessen können die erfindungsgemäßen Fischbecken mitsamt der diese aufnehmenden Rahmenkonstruktion auf dem Boden eines bestehenden Gebäudes aufgebaut werden, was die Installationskosten erheblich reduziert.

Dabei ist zu verstehen, dass es sich bei den Fischbecken gemäß der Erfindung um Aufzuchtbecken handelt. Diese haben typischerweise und vorzugsweise ein Gesamtvolumen von 15-23m³, vorzugsweise 20m³. Davon entfallen typischerweise auf Bioreaktorbereich 4-6m³, insbesondere 5m³, auf Fischaufenthaltsbereich 8-12m³, insbesondere 10m³, und auf Sedimentationsbereich 3-5m³, insbesondere 4m³.

Dabei ist zu verstehen, dass nicht notwendigerweise alle Bodenbereiche des erfindungsgemäßen Fischbeckens oberhalb der Bodenaufstandsfläche der Rahmenkonstruktion liegen müssen. Wie aus DE 195 21 037 A1 ersichtlich, kann ein vorteilhafter Aufbau eines Fischbeckens insbesondere darin bestehen, dass sowohl der Sedimentationsbereich als auch der Reaktorbereich des Fischbeckens tiefer liegende Bodenbereiche aufweisen als der Fischaufenthaftsbereich. In bestimmten Anwendungen kann es daher vorteilhaft sein, zumindest einen unteren Abschnittsbereich des Sedimentationsbereichs und/oder des Reaktorbereichs in eine Senke einzulassen und nur den Boden des Fischaufenthaltsbereichs oberhalb der Bodenaufstandsfläche bzw. kongruent zu dieser anzuordnen. Bevorzugt ist jedoch, dass das gesamte Becken oberhalb der Bodenaufstandsfläche angeordnet ist, so dass sich keine Beckenbereiche in den Boden erstrecken, auf dem die Rahmenkonstruktion steht.

Gemäß der Erfindung besteht die Rahmenkonstruktion aus einer Vielzahl von Streben, welche an der Außenfläche der Wände und Böden anliegen und diese gegen den statischen Druck eine innerhalb des Beckenbehälters enthaltenen Wasservolumens abstützen. Eine funktionelle Doppelnutzung der Rahmenkonstruktion wird somit ermöglicht, indem einerseits der durch den Wasserdruck aufgebaute statische Druck innerhalb des Beckens von der Rahmenkonstruktion aufgenommen wird und hierdurch eine dünnwandigere und materialsparendere Konstruktion des Beckens ermöglicht wird, die ihrerseits nicht alleinstehend gegenüber dem statischen Druck ausgelegt werden musst. Andererseits dient die Rahmenkonstruktion dazu, die Gewichtskraft des Fischbeckens zumindest teilweise, vorzugsweise vollständig zu tragen und auf dem Boden abzustützen. Dabei ist es besonders bevorzugt, wenn die Rahmenkonstruktion zu diesem Zweck zumindest Horizontal- und Vertikalstreben aufweist, vorzugsweise auch eine Diagonalverstrebung.

Gemäß einer bevorzugten Ausführungsform ist vorgesehen, dass in einer den Fischaufenthaltsbereich begrenzenden Wand eine verschließbare Öffnung ausgebildet ist, die auf der zum Beckenbehälter außen liegenden Seite vorzugsweise einen Anschluss für eine Abfischleitung aufweist. Eine solche Öffnung ermöglicht einerseits das Ablassen des Wassers innerhalb des Fischbeckens, zumindest innerhalb des Fischaufenthaltsbereichs des Fischbeckens, unter Schwerkrafteinwirkung und somit ohne Zuhilfenahme von Pumpen öder dergleichen. Insbesondere kann eine solche Öffnung aber zu einer vereinfachten Abfischung des Fischbeckens genutzt werden, indem - beispielsweise mittels einer Abfischleitung, die an die Öffnung angeschlossen wird - die Fische mitsamt des Wassers durch die Öffnung und gegebenenfalls die Abfischleitung in einen separaten Behälter durch Schwerkraft abgeführt werden und auf diese Weise sich in dem separaten Abfischbehälter sammeln. Das in den Abfischbehälter strömende Wasser kann unter Zurückhaltung der Fische dem Fischbecken wieder zugeführt werden.

Noch weiter ist es bevorzugt, dass der Bioreaktorbereich, der Fischaufenthaltsbereich und der Sedimentationsbereich in dieser Reihenfolge strömungstechnisch hintereinander angeordnet sind und vorzugsweise der Fischaufenthaltsbereich geometrisch zwischen dem Bioreaktorbereich und dem Sedimentationsbereich angeordnet ist. Auf diese Weise wird eine Durchströmung in technisch und geometrisch vorteilhafter Weise des Fischbeckens erzielt, der eine unmittelbare Zufuhr von frischem Wasser in den Fischaufenthaltsbereich aus dem Reaktorbereich und ein unmittelbares Entfernen von Feststoffen aus dem Aufenthaltsbereich im Sedimentationsbereich ermöglicht, wodurch eine bestmögliche Wasserqualität in der Aquakultur erzielt wird. Der Aufbau eines Fischbeckens nach dieser Bauweise eignet sich insbesondere für eine Anordnung mehrerer Fischbecken in einem Wasserkreislauf.

Die Erfindung kann fortgebildet werden in einem Fischbecken der eingangs genannten Art verkörpert sein, bei dem zwischen dem Bioreaktorbereich und dem Fischaufenthaltsbereich ein Strömungsschacht ausgebildet ist, der vom Bioreaktorbereich mittels einer ersten Schottwand abgetrennt ist, die eine Öffnung im oberen Bereich aufweist und der vom Fischaufenthaltsbereich mittels einer zweiten Schottwand abgetrennt ist, die eine Öffnung unterhalb des oberen Bereichs, vorzugsweise im unteren Bereich, aufweist, deren untere Begrenzungskante vorzugsweise auf der Ebene des Bodens des Fischaufenthaltsbereich liegt. Gemäß dieses Aspekts wird eine besonders günstige Durchströmung des Fischbeckens, insbesondere des Fischaufenthaltsbereichs erzielt. Grundsätzlich ist es einerseits vorteilhaft, wenn der Bioreaktorbereich eine nahe der Oberfläche des Wasserspiegels im Fischbecken liegende Austrittsöffnung für das Wasser aufweist, welches den Bioreaktorbereich durchströmt, um eine vollständige Durchströmung des Bioreaktorbereichs mittels der in dessen Bodenbereich eingeblasenen Luft zu erzielen. Andererseits hat sich gezeigt, dass es wünschenswert ist, den Austrag von Sedimenten aus dem Fischaufenthaltsbereich durch eine im Bodenbereich des Fischaufenthaltsbereichs liegende Öffnung zwischen Fischaufenthaltsbereich und Sedimentationsbereich zu verbessern. Dies wird erreicht, indem durch die zweite Schottwand das aus dem Bioreaktorbereich austretende Wasser nicht im oberen Bereich sondern in einem tiefer liegenden Bereich in den Fischaufenthaltsbereich eingeleitet wird. Hierdurch bildet sich eine bodennahe Strömung im Fischaufenthaltsbereich aus, die in Richtung des Sedimentationsbereichs gerichtet ist. Diese bodennahe Strömung ist insbesondere dann günstig und trägt Sedimente wirksam in den Sedimentationsbereich, wenn sich die untere Begrenzung sowohl der Öffnung in der zweiten Schottwand als auch der Öffnung zwischen Fischaufenthaltsbereich und Sedimentationsbereich auf Höhe der Bodenfläche des Fischaufenthaltsbereichs liegen.

Gemäß eines weiteren Aspekts der Erfindung wird eine Indoor-Fischbeckenanordnung bereitgestellt, umfassend
- mindestens ein Paar von Fischbecken nach einem der vorhergehenden Ansprüche, welche so zueinander angeordnet sind, dass die einander zugewandten Wände der Fischaufenthaltsbereiche der beiden Fischbecken einen zwischen den Fischbecken angeordneten Zwischenraum begrenzen, und
- eine Wartungslauffläche, welche im Zwischenraum auf einer solchen Höhe angeordnet ist, dass eine auf der Wartungslauffläche stehende Person von oben in den Fischaufenthaltsbereich greifen kann.

Dieser Aspekt der Erfindung ist auf eine Fischfarm beliebiger Größe gerichtet, die mehrere Fischbecken der zuvor beschriebenen, erfindungsgemäßen Bauweise umfasst. Dabei sind zumindest zwei Fischbecken als Paar angeordnet und eine im Zwischenraum zwischen diesen Fischbecken angeordnete Wartungslauffläche vorgesehen, die es einem Benutzer ermöglicht, Wartungs- und Servicearbeiten an den Fischbecken durchzuführen.

Die erfindungsgemäße Fischbeckenanordnung kann fortgebildet werden, indem eine Mehrzahl von Fischbeckenpaaren, die so zueinander angeordnet sind, dass die Zwischenräume der Fischbecken-Paare einen Wartungsgang ausbilden, und ein durch die Wartungslaufflächen gebildeter Wartungslaufgang bereitgestellt wird. Durch diese vorteilhafte Anordnungsweise kann ein Benutzer der Fischbeckenanordnung mehrere Fischbeckenpaare, die so angeordnet sind, dass durch jeweils ein Fischbecken der Paare eine erste Reihe und durch das jeweils andere Fischbecken der Paare eine zweite gebildet wird, in effizienter Weise warten und Servicearbeiten daran ausführen. Hierzu ist zwischen den beiden durch die Fischbeckenpaare gebildeten Reihen ein Wartungslaufgang ausgebildet ist, der eine erhöhte Standposition und somit gute Wartungs- und Servicemöglichkeiten verschafft. Dabei ist zu verstehen, dass der Wartungslaufgang, ebenso wie die zuvor genannte Wartungslauffläche vorzugsweise an der Rahmenkonstruktion der Fischbecken ortsfest oder beweglich befestigt ist.

Weiterhin ist es bevorzugt, wenn die erfindungsgemäße Fischbeckenanordnung einen Abfischwagen umfasst, der in Längsrichtung des Wartungslaufgangs verschieblich gelagert ist und der einen Behälter zur Aufnahme von Fischen aufweist, der vorzugsweise mittels einer Abfischleitung mit einer Abfischöffnung eines Fischbeckens verbindbar ist. Ein solcher erfindungsgemäßer Abfischwagen erleichtert in hohem Maße die Nutzung der erfindungsgemäßen Fischbeckenanordnung und macht einen effizienteren Betrieb möglich. Der Abfischwagen kann aufgrund seiner längsverschieblichen Ausgestaltung entlang der Fischbecken verschoben werden und auf diese Weise zu einem Fischbecken bewegt werden, welches abgefischt werden soll. Der Abfischvorgang selbst kann dann in konventioneller Weise mittels Keschern oder dergleichen erfolgen, wobei die Fische unmittelbar über einen nur kurzen Weg in den Behälter des Abfischwagens eingefüllt werden. Besonders bevorzugt ist es aber, wenn eine direkte Verbindung zwischen dem Fischaufenthaltsbereich und dem Behälter des Abfischwagens hergestellt wird, beispielsweise über eine Abfischleitung, die an eine entsprechende Öffnung des Beckens angeschlossen werden kann und auf diese Weise eine vorzugsweise schwerkraftbetätigte Strömung der Fische aus dem Fischbecken in den Behälter des Abfischwagens erreicht wird. Dabei ist zu verstehen, dass der Abfischwagen vorzugsweise Mittel aufweist, um das hierbei abfließende Wasser aus dem Behälter wieder zumindest teilweise zurück in das Fischbecken zu befördern, beispielsweise mittels einer Pumpe, wobei entsprechende Mittel vorgesehen sind, um die Fische im Behälter des Abfischwagens zurückzuhalten.

Gemäß einer weiteren bevorzugten Ausführungsform wird die erfindungsgemäße Indoor-Fischbeckenanordnung fortgebildet durch einen Abfischwagen, der in Längsrichtung des Wartungslaufgangs auf Schienen verschieblich gelagert ist, die vorzugsweise an der Rahmenkonstruktion der Fischbecken befestigt sind. Eine solche Lagerung, die insbesondere mittels am Abfischwagen angeordneten Rollen, die auf den Schienen laufen, ausgeführt werden kann, ermöglicht eine geräuscharmes und kraftschonendes Bewegen des Abfischwagens. Dabei können die Schienen insbesondere an der Rahmenkonstruktion befestigt werden, um einen insgesamt kompakten und materialsparenden Aufbau der erfindungsgemäßen Anordnung zu erzielen. Dabei ist zu verstehen, dass die Schienen insbesondere beidseits vom Verfahrweg des Abfischwagens angeordnet sein können und zu diesem Zweck an Rahmenkonstruktionen unterschiedlicher Reihen von Fischbecken angeordnet und befestigt sein können.

Eine besondere Ausführungsform der Variante mit Abfischwagen ist dadurch gekennzeichnet, dass der Abfischwagen in dem durch die Zwischenräume gebildeten Bereich verschieblich gelagert. Der Abfischwagen kann hierbei oberhalb oder unterhalb eines in dem Zwischenraum angeordneten Wartungslaufgangs angeordnet sein oder den Wartungslaufgang selbst bilden, indem entsprechende Aufstandsflächen auf dem Abfischwagen ausgebildet sind.

Gemäß einer hierzu alternativen Ausführungsform ist vorgesehen, dass der Abfischwagen in einem den Zwischenräumen gegenüberliegenden Bereich verschieblich gelagert ist. In diesem Fall kann eine doppelte Belegung des Zwischenraums durch den Abfischwagen und den Wartungslaufgang vermieden werden und der Abfischwagen hat stattdessen von einer anderen Seite als dem Zwischenraum Zugang zu den Fischbecken. Solche Ausgestaltungen eignen sich insbesondere bei mehrreihigen Fischbeckenanordnungen, wobei zu verstehen ist, dass ein Abfischwagen auch für Fischbecken einsetzbar ist, die beidseits von seinem Laufbereich angeordnet sind.

Bei den Ausgestaltungen mit Abfischwagen ist es insbesondere bevorzugt, wenn in einer Wand, welche den Fischaufenthaltsbereich zum Bereich, in dem der Abfischwagen verschieblich gelagert ist, begrenzt, jedes Fischbeckens eine verschließbare Öffnung aufweist, die auf der zum Abfischwagen weisenden Seite einen Anschluss für eine Abfischleitung aufweist, wobei die Öffnungen vorzugsweise in Bezug auf dem Verfahrweg des Abfischwagens, also beispielsweise die Bodenaufstandsfläche, auf der gleichen Höhe liegen. Auf diese Weise kann der Abfischwagen in einem effizienten und schnellen Vorgang mit den Fischbecken zum Ausführen des Abfischvorgangs verbunden werden, indem ein entsprechender Anschluss am Abfischwagen vorgesehen ist. Da dieser Anschluss sich aufgrund der horizontalen Verschieblichkeit des Abfischwagens insbesondere auf einer konstanten Höhe bewegt, wenn der Abfischwagen verschoben wird, ist es vorteilhaft, die Öffnungen auch auf einer übereinstimmenden Höhe anzuordnen, so dass keine Justage des Anschlusses in größerem Ausmaß erfolgen muss.

Noch weiter ist es bevorzugt, wenn die Wand, die den Fischaufenthaltsbereich eines ersten Fischbeckens zu dem Bereich, in dem der Abfischwagen verschieblich gelagert ist, begrenzt, eine erste verschließbare Öffnung aufweist, die auf der zum Abfischwagen weisenden Seite vorzugsweise einen Anschluss für eine Abfischleitung aufweist und die in den Fischaufenthaltsbereich des ersten Fischbeckens mündet, und eine zweite verschließbare Öffnung aufweist, die auf der zum Abfischwagen weisenden Seite einen Anschluss für eine Abfischleitung aufweist, die über eine Rohrleitung in den Fischaufenthaltsbereich eines zweiten Fischbeckens mündet, wobei das erste Fischbecken zwischen dem zweiten Fischbecken und dem Bereich, in dem der Abfischwagen verschieblich gelagert ist, angeordnet ist und vorzugsweise die erste und zweite Öffnung in Bezug auf die Bodenaufstandsfläche auf der gleichen Höhe liegen. Gemäß dieser bevorzugten Ausführungsform wird es möglich, mittels eines Abfischwagens zwei Fischbecken abzufischen, die in unterschiedlichen Reihen angeordnet sind, wobei der Abfischwagen in einem Bewegungsraum verschieblich ist, der unmittelbar an eines der beiden Becken angrenzt. Das andere Becken wird für den Abfischwagen zugänglich, indem eine entsprechende Rohrleitung vorgesehen ist, die in eine entsprechende Öffnung mündet, die auf der zum Bewegungsraum des Abfischwagens weisenden Seite liegt. Dabei ist zu verstehen, dass die erste und zweite verschließbare Öffnung vorzugsweise so ausgebildet sind, dass der Verschluss unmittelbar im Beckenwandbereich des jeweiligen Fischbeckens erfolgt, um zu verhindern, dass sich Fische nach Verschluss der Öffnung in der Rohrleitung befinden und nicht mehr in den Behälter des Abfischwagens gelangen können. Die bei dieser Ausführungsform vorgesehene Rohrleitung kann insbesondere unterhalb des ersten Fischbeckens durchlaufen oder kann durch den Fischaufenthaltsbereich dieses ersten Fischbeckens laufen.

Eine weitere bevorzugte Ausführungsform zeichnet sich durch vier sich parallel nebeneinander erstreckende, horizontal benachbarte Reihen von Fischbecken aus, wobei zwischen der ersten und zweiten sowie der dritten und vierten benachbarten Reihe ein Wartungsgang ausgebildet ist und zwischen der zweiten und dritten Reihe ein Bereich, in dem der Abfischwagen verschieblich gelagert ist, angeordnet ist, und durch eine Mehrzahl von Öffnungen zum Anschluss einer Abfischleitung in den Wänden, die zum Bereich, in dem der Abfischwagen verschieblich gelagert ist, weisen, wobei jedem Fischbecken eine Öffnung zugeordnet ist. Mit dieser Ausgestaltung wird eine besonders raumsparende und effizient zu bedienende Anordnung von Fischbecken bereitgestellt. Diese Anordnung ist dadurch gekennzeichnet, dass insgesamt drei Gänge zwischen den vier Fischbecken vorgesehen sind, wobei der mittlere dazu dient, den Abfischwagen darin zu verschieben und der Abfischwagen vorzugsweise über entsprechende Rohrleitungen mit den Fischbecken aller vier Fischbeckenreihen zum Abfischen verbunden werden kann. In den beiden äußeren Zwischenräumen zwischen den Fischbeckenreihen sind entsprechende Wartungslaufgänge ausgebildet, die Servicevorgänge und Wartungsarbeiten an jedem der Fischbecken der vier Reihen durch direkte Zugriffsmöglichkeit ermöglichen.

Noch weiter ist es bevorzugt, wenn die Fischbecken in zumindest einer Reihe angeordnet sind, wobei benachbarte Fischbecken in der Reihe so einander zugeordnet sind, dass der Wasserablauf aus dem Sedimentationsbereich eines Beckens in den Wasserzulauf eines Bioreaktorbereichs eines benachbarten Beckens mündet, und vorzugsweise der Sedimentationsbereich eines Beckens an den Bioreaktorbereich eines benachbarten Beckens grenzt. Gemäß dieser bevorzugten Ausführungsform werden die Fischbecken in eine für die Wasserqualität vorteilhaften Weise miteinander gekoppelt, indem der Wasserkreislauf alternierend durch Reaktorbereich, Fischaufenthaltsbereich, Sedimentationsbereich, Reaktorbereich, Fischaufenthaltsbereich, Sedimentationsbereich u.s.w. aufeinanderfolgender Becken geführt wird.

Noch weiter ist es bevorzugt, wenn die Fischbecken in zumindest zwei Reihen angeordnet sind und ein Wasserkreislauf durch die Fischbecken der zumindest zwei Reihen ausgebildet ist, wobei zumindest zwei Paare einander gegenüberliegender Fischbecken so einander zugeordnet sind,
- dass der Wasserablauf aus dem Sedimentationsbereich eines Beckens einer ersten Reihe in den Wasserzulauf eines Bioreaktorbereichs eines Beckens einer benachbarten Reihe mündet, und
- dass vorzugsweise der Wasserablauf des Sedimentationsbereichs eines Beckens der benachbarten Reihe in den Wasserzulauf des Bioreaktorbereichs eines Beckens der ersten Reihe mündet.

Auf diese Weise wird in einer für die Wasserqualität günstigen und den Aufbau vereinfachenden Weise ein Wasserkreislauf durch zumindest zwei Reihen von Fischbecken gebildet. Dabei kann insbesondere in den jeweils am Ende der Reihe liegenden Paaren von Fischbecken die entsprechende Verbindung von Sedimentationsbereich und Reaktorbereich erfolgen, um auf diese Weise einen alle Fischbecken erfassenden Kreislauf über die beiden Reihen auszubilden.

Dabei ist zu verstehen, dass es insbesondere vorteilhaft ist, wenn sich die Paare auch so gegenüberliegen, dass der Sedimentationsbereich der einen Reihe unmittelbar neben dem Reaktorbereich der anderen Reihe zu liegen kommt, so dass hier kurze Leitungswege realisiert werden können.

Bevorzugte Ausführungsformen der Erfindung werden anhand der Figuren erläutert. Es zeigen:
- Fig. 1:: eine perspektivische Ansicht eines erfindungsgemäßen Fischbeckens gemäß einer ersten Ausführungsform von schräg vorne seitlich oben,
- Fig. 2:: eine geschnittene Seitenansicht des Fischbeckens der Fig. 1,
- Fig. 3:: eine Draufsicht des Fischbeckens gemäß Figur 1,
- Fig. 4:: eine perspektivische Ansicht eines erfindungsgemäßen Fischbeckens gemäß einer zweiten Ausführungsform von schräg vorne seitlich oben,
- Fig. 5:: eine geschnittene Seitenansicht des Fischbeckens der Figur 4,
- Fig. 6:: eine Draufsicht des Fischbeckens gemäß Figur 4,
- Fig. 7:: eine Querschnittsansicht einer Indoor-Fischfarm mit einer erfindungsgemäßen Fischbeckenanordnung in vier Reihen gemäß einer ersten Ausführungsform,
- Fig. 8:: eine Draufsicht der Fischfarm gemäß Figur 7, und
- Fig. 9:: eine Querschnittsansicht einer Indoor-Fischfarm mit einer erfindungsgemäßen Fischbeckenanordnung in vier Reihen gemäß einer zweiten Ausführungsform.

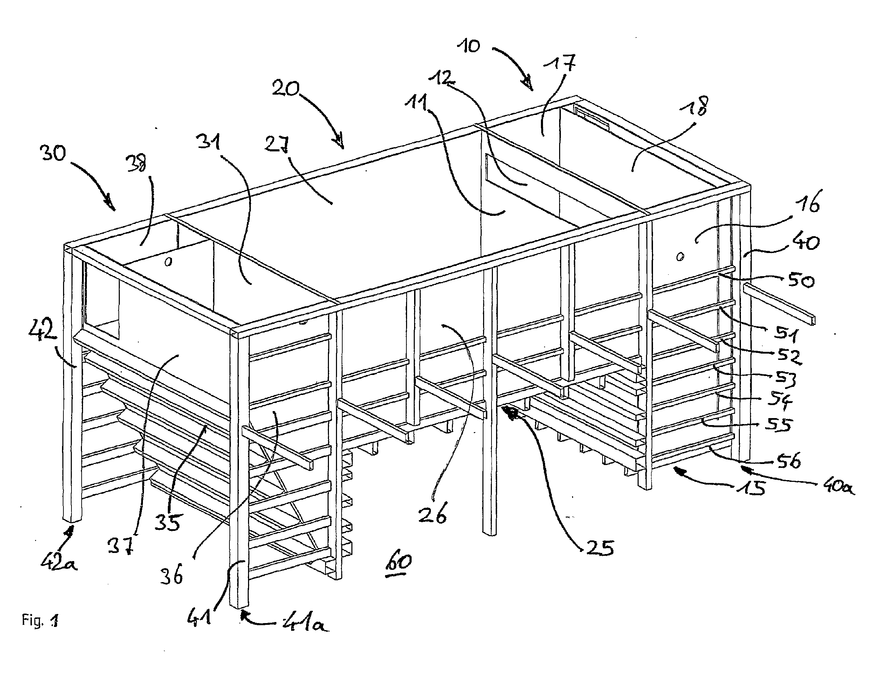

Figuren 1-3 zeigen ein Fischbecken gemäß einer ersten Ausführungsform der Erfindung. Das Fischbecken umfasst einen Bioreaktorbereich 10, einen Fischaufenthaltsbereich 20 und einen Sedimentationsbereich 30. Die drei Bereiche 10, 20, 30 sind in einem aus einem Stück gebildeten Becken mit Wand und Bodenbereich ausgebildet und voneinander durch Trennwände abgetrennt. Eine erste Trennwand 11 trennt den Bioreaktorbereich 10 vom Fischaufenthaltsbereich 20 und weist in ihrem oberen Bereich eine längliche Öffnung 12 auf, durch welche frisch aufbereitetes Wasser aus dem Bioreaktorbereich 10 in den Fischaufenthaltsbereich 20 strömen kann. Das Wasser wird im Bioreaktorbereich insbesondere durch Einsprudelung feinblasiger Luft vom Bodenbereich des Bioreaktorbereichs ausgehend und mikrobiologische Vorgänge unter aeroben Bedingungen aufbereitet.

Eine zweite Trennwand 31 trennt den Fischaufenthaltsbereich 20 vom Sedimentationsbereich 30. In der zweiten Trennwand ist auf Höhe und oberhalb des Bodens eine Öffnung 32 angeordnet, durch welche sedimenthaltiges Wasser aus dem Fischaufenthaltsbereich in den Sedimentationsbereich strömen kann.

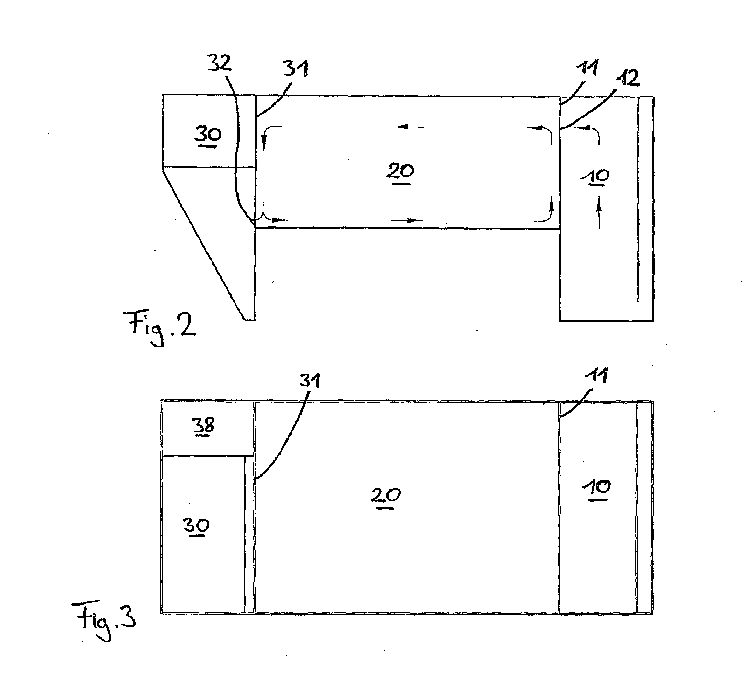

Durch diese Ausgestaltung strömt Wasser aus dem Bioreaktorbereich als oberflächennahe Strömung in den Fischaufenthaltsbereich und verursacht dort eine Zirkulation, wie durch die Pfeile in Fig. 2 verdeutlicht.

Wie aus den Figuren 1-3 ersichtlich, ist der Sedimentationsbereich 30 in seinem oberen Drittel etwa kubisch ausgebildet und in dem hieran nach unten anschließenden Bereich keilförmig nach unten zulaufend ausgebildet. An der tiefsten Stelle des Sedimentationsbereichs sammeln sich die Feststoffe und können von dort über eine separate Leitung (nicht dargestellt) abgeführt werden.

Der Fischaufenthaltsbereich 20 wird durch einen Bodenbereich 25 nach unten begrenzt. In gleicher Weise wird der Bioreaktorbereich 10 durch einen Bodenbereich 15 nach unten begrenzt. Der Bodenbereich 25 des Fischaufenthaltsbereichs liegt dabei höher als der Bodenbereich 15 des Bioreaktorbereichs, der etwa auf gleicher Höhe wie das durch einen schräg verlaufenden Bodenbereich 35 gebildete untere, spitz zulaufende Ende des Sedimentationsbereichs 30 liegt.

Der Reaktorbereich 10, der Fischaufenthaltsbereich 20 und der Sedimentationsbereich 30 werden durch Wände 16, 26, 36, 37, 38, 27, 17, 18 seitlich begrenzt, die ein entsprechendes Innenvolumen zur Aufnahme des Wassers innerhalb des Fischbeckens definieren.

In Bezug auf dieses Innenvolumen des Fischbeckens außenliegend von den Wänden ist eine Rahmenkonstruktion angeordnet, die aus einer Vielzahl von Streben besteht. Die Streben lassen sich grundsätzlich in Vertikalstreben, wie beispielsweise die an den Eckbereichen des Beckens vorgesehenen Vertikalstreben 40, 41, 42 und Horizontalstreben, wie beispielsweise die den Reaktorbereich seitlich abstützenden Streben 50-56 unterteilen. Die Streben sind teilweise miteinander verschweißt und teilweise miteinander verschraubt, um eine Montage und einen Austausch der Wände, welche das Fischbecken und dessen Aufenthaltsbereiche begrenzen, zu ermöglichen.

Eine Reihe von Vertikalstreben stützen sich an ihrem unteren Ende auf einer Bodenaufstandsfläche 60 ab, wie beispielhaft für die unteren Enden 40a, 41a, 42a der Vertikalstreben 40-42 bezeichnet. Sowohl der gesamte Sedimentationsbereich als auch der gesamte Fischaufenthaltsbereich und der gesamte Bioreaktorbereich liegen oberhalb dieser Bodenaufstandsfläche 60. Infolgedessen liegen auch die Böden dieser Bereiche, also insbesondere der Bodenbereich 15 und der Bodenbereich 25 sowie der schräg nach unten zulaufende Bodenbereich 35 des Sedimentationsbereichs 30 oberhalb dieser Bodenaufstandsfläche 60.

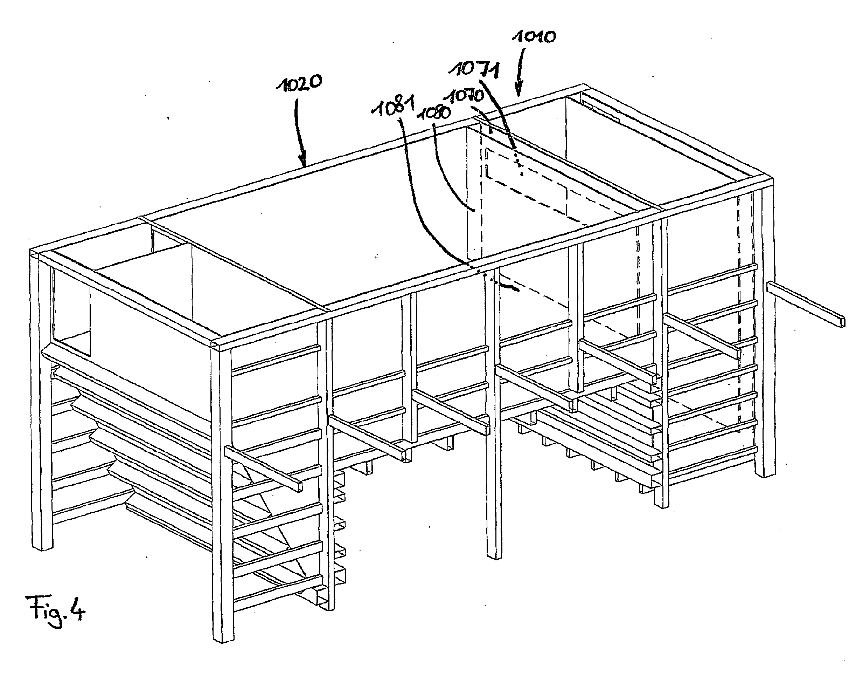

In den Figuren 4-6 ist eine zweite Ausführungsform des erfindungsgemäßen Fischbeckens gezeigt, die in einer Reihe von Merkmalen der zuvor beschriebenen ersten Ausführungsform ähnelt und daher hier nur hinsichtlich der unterschiedlichen Merkmale beschrieben wird.

Die zweite Ausführungsform weist anstelle der ersten Trennwand zwischen Bioreaktorbereich 1010 und Fischaufenthaltsbereich 1020 eine Schottanordnung auf. Diese Schottanordnung wird durch eine erste Schottwand 1070, eine zweite Schottwand 1080 und einen durch diesen beiden Schottwänden gebildeten Wasserführungsschacht 1090 gebildet.

Die erste Schottwand 1070 trennt den Bioreaktorbereich von dem Wasserführungsschacht und weist eine sich über die gesamte Breite erstreckende Öffnung 1071 auf. Diese Öffnung 1071 ist im Bereich der Oberfläche des Wassers innerhalb des Fischbeckens angeordnet.

Die zweite Schottwand 1080 trennt den Wasserführungsschacht vom Fischaufenthaltsbereich ab. Sie endet oberhalb der Bodenfläche 1025 des Fischaufenthaltsbereichs und lässt hierdurch eine sich über die gesamte Breite erstreckende Öffnung 1081 frei. Die Öffnung 1081 ist so angeordnet, dass ihre untere Begrenzungskante durch die Bodenfläche 1025 des Fischaufenthaltsbereichs gebildet wird und sich die Öffnung hiervon ausgehend über einen begrenzten Bereich nach oberhalb erstreckt.

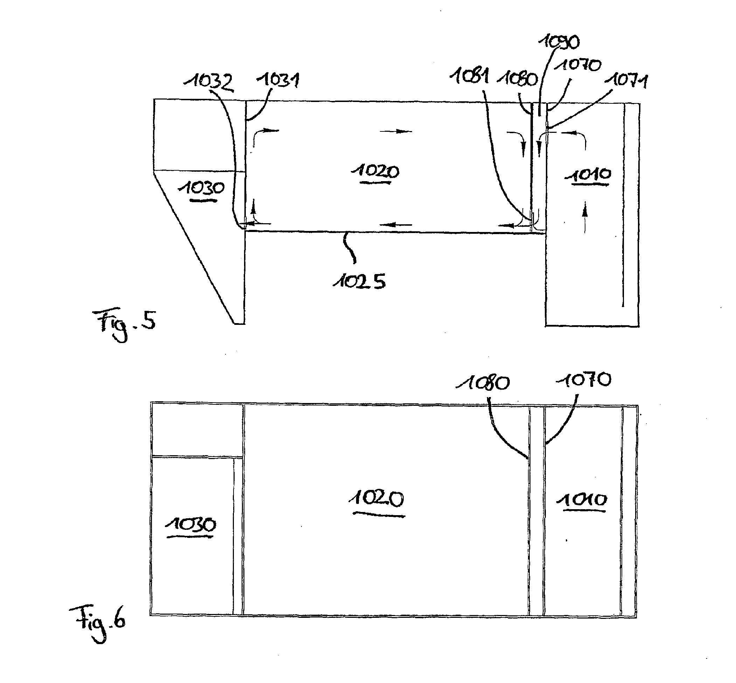

Durch diese Anordnung wird das aus dem Bioreaktorbereich 1010 austretende Wasser im Wasserführungsschacht 1090 nach unten geleitet und tritt knapp oberhalb der Bodenfläche 1025 des Fischaufenthaltsbereichs 1020 in einer als parallel zur Bodenfläche gerichtete Strömung ein. Es bildet sich somit im Fischaufenthaltsbereich 1020 eine durch die Pfeile in Fig. 5 gekennzeichnete Zirkulation ein, die bodennah in Richtung des Sedimentationsbereichs 1030 strömt und oberflächennah in Richtung des Bioreaktorbereichs 1010. Dies bewirkt einen besonders wirksamen Austrag von Sedimenten aus dem Fischaufenthaltsbereich 1020 in den Sedimentationsbereich 1030.

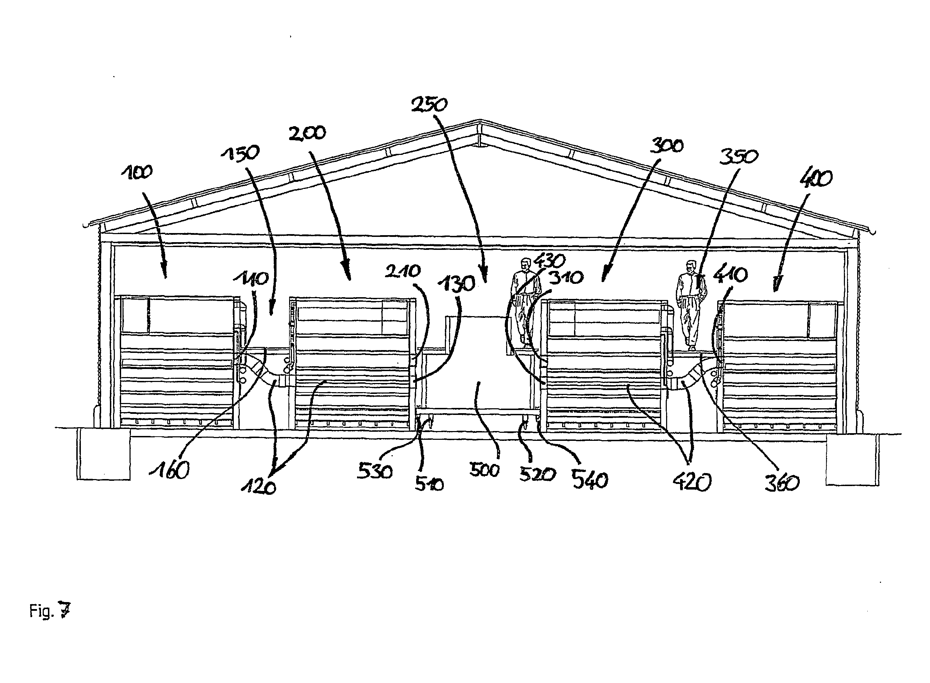

Figur 7 zeigt eine Querschnittsansicht einer Fischbeckenanordnung, die vier Fischbeckenreihen 100, 200, 300, 400 umfasst. Die beiden linken Fischbeckenreihen 100, 200 sind in einem solchen Abstand zueinander angeordnet, dass zwischen ihnen ein Zwischenraum 150 ausgebildet ist. In diesem Zwischenraum 150 ist ein gegenüber der Bodenaufstandsfläche 60 erhöhter Zwischenlaufgang 160 ausgebildet, auf dem sich ein Benutzer der Fischbeckenanordnung entlang der beiden Fischbeckenreihen 100, 200 bewegen kann und Service- und Wartungsarbeiten an den Fischbecken dieser Reihen ausführen kann. In hierzu symmetrischer Weise ist zwischen den Fischbeckenreihen 300 und 400 ein Zwischenraum 350 ausgebildet, in dem ein Wartungslauf 360 angeordnet ist. Die Wartungslaufgänge 160, 360 werden durch ein Laufgitter gebildet, das auf Horizontalstreben aufliegt, die mit der Rahmenkonstruktion der Fischbeckenreihen 100, 200 bzw. 300, 400 verbunden sind.

Im Mittelgang 250 der dargestellten Fischbeckenanordnung, also dem Zwischenraum zwischen den Fischbeckenreihen 200 und 300, ist ein Raum vorgesehen, der breiter ist als die Zwischenräume 150, 350. In diesem Raum ist ein Abfischwagen 500 angeordnet, der sich auf Rollen 510, 520 und Schienen 530, 540 abstützt bzw. daran geführt wird.

Die Fischbeckenreihen 200 und 300 verfügen in einer Seitenwand des Fischaufenthaltsbereichs über eine Abfischöffnung 210 bzw. 310, die zu dem Bereich hin ausgebildet ist, in dem der Abfischwagen 500 verschieblich bewegbar ist. Die beiden Öffnungen 210, 310 liegen auf übereinstimmender Höhe.

Die Fischbecken der äußeren Reihen 100, 400 weisen ebenfalls je eine Öffnung in einer Seitenwand des Fischaufenthaltsbereichs auf, die über je eine Rohrleitung 120, 420 mit Öffnungen 130, 430 verbunden sind, die wiederum zu dem Mittelgang 250 hin ausgebildet sind, in dem der Abfischwagen 500 verschiebbar gelagert ist. Abschnitte der Rohrleitung 120, 420 verlaufen hierbei unterhalb des Bodenbereichs des Fischaufenthaltsbereichs der Fischbecken der Fischreihen 200, 300.

Die Öffnungen 130, 430 sind im abgebildeten Beispiel auf einer übereinstimmenden Höhe angeordnet und liegen unterhalb der Öffnung 210, 310 der Fischbecken der Reihen 200 und 300. Der Abfischwagen 500 weist hierzu insbesondere zu beiden Seiten hin Abfischanschlussleitungen (nicht gezeigt) auf, die in der Höhe verstellt werden können und mit dem Abfischwagen horizontal verschoben werden können, um die Öffnungen aller vier Fischbeckenreihen daran anschließen zu können.

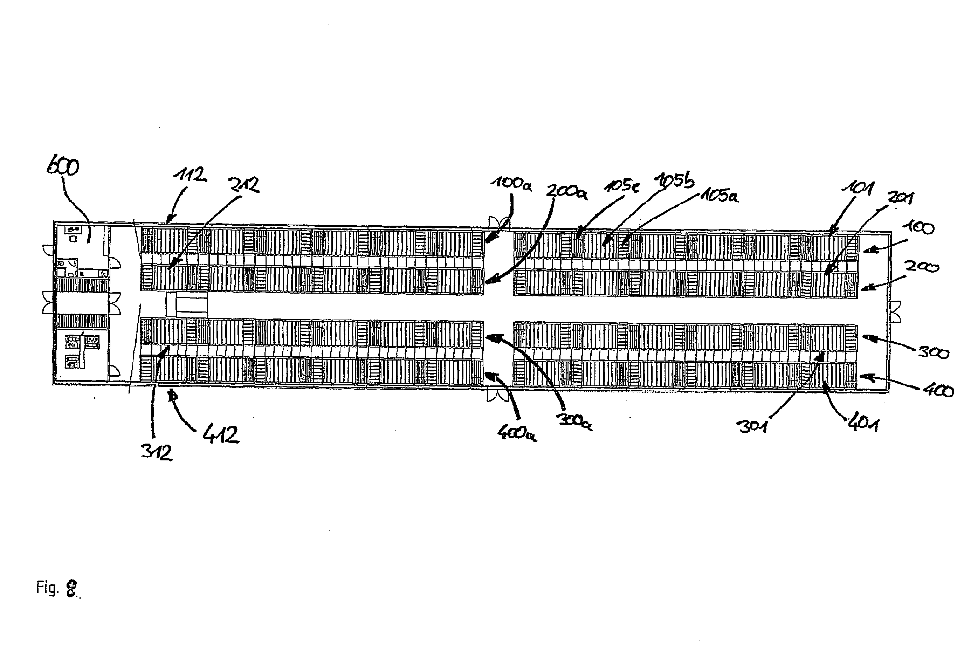

Figur 8 zeigt eine Draufsicht auf die Fischbeckenanordnung der Figur 1 und verdeutlicht den Aufbau aller darin vorgesehenen Fischbecken. Jede Fischbeckenreihe umfasst insgesamt 12 Fischbecken 101-112, 201-212, 301-312 und 401-412. Dabei sind die Fischbecken jeweils nach der in Figur 1 gezeigten Ausgestaltung ausgebildet und weisen jeweils einen Reaktorbereich 105a, einen Fischaufenthaltsbereich 105b und einen Sedimentationsbereich 105c auf, wie beispielhaft anhand des Beckens 105 bezeichnet. Die Fischbecken sind in einer Reihe stets so angeordnet, dass an den Sedimentationsbereich eines Beckens unmittelbar der Bioreaktorbereich eines benachbarten Beckens anschließt.

Jede Reihe ist in eine linke Fischbecken- und eine rechte Fischbeckengruppe unterteilt. Die jeweils linke Gruppe 100a, 200a der Fischbeckenreihe 100, 200 bildet einen in sich geschlossenen Wasserkreislauf, in gleicher Weise bilden die linken Gruppen 300a, 400a der Reihe 300, 400 einen in sich geschlossenen Wasserkreislauf und die rechten Gruppen 100b, 200b sowie die rechten Gruppen 300b, 400b der Reihen 100-400. Dieser in sich geschlossene Wasserkreislauf wird erzielt, indem das Wasser jeweils aus einem Sedimentationsbereich eines Beckens einer Reihe in den Bioreaktorbereich eines benachbarten Fischbeckens der gleichen Reihe strömt und in dem an den beiden Enden der linken bzw. rechten Reihenabschnitte liegenden Paar von Fischbecken das Wasser auf einem Sedimentationsbereich des Beckens der einen Reihe in den Bioreaktorbereich des Beckens der anderen Reihe strömt.

Schließlich ist, wie aus Figur 8 ersichtlich, ein zentraler Steuerungsraum 600 für die Steuerungsvorgänge und analytische Vorgänge an den Fischbecken in dem Gebäude vorgesehen, welches die Indoor-Fischbeckenanordnung aufnimmt.

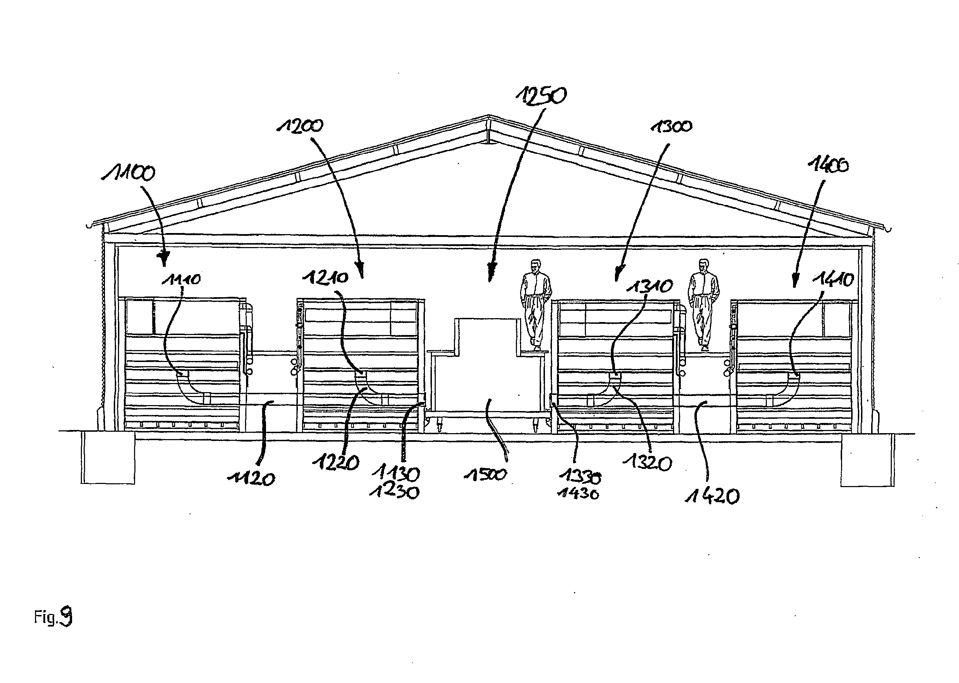

Figur 9 zeigt eine zweite Ausführungsform einer erfindungsgemäßen Fischbeckenanordnung, welche mit der zuvor beschriebenen ersten Ausführungsform in einer Reihe von Merkmalen übereinstimmt und hier nur im Hinblick auf die unterschiedlichen Merkmale erläutert wird.

Die Fischbeckenreihen 1200 und 1300 verfügen über eine Abfischöffnung 1210 bzw. 1310, die im Bodenbereich des Fischaufenthaltsbereichs ausgebildet ist. Jede Abfischöffnung 1210, 1310 ist mittels je einer Rohrleitung 1220, 1320, die aus einem zunächst senkrecht nach unten gerichteten Verlauf um 90° in einen horizontalen Verlauf in Richtung des Mittelgangs 1250 abgewinkelt ist, mit einer Anschlussöffnung 1230, 1330 verbunden, die zum Mittelgang 1250 hin ausgebildet ist, in dem der Abfischwagen 1500 verschieblich bewegbar ist. Die beiden Öffnungen 1230, 1330 liegen auf übereinstimmender Höhe.

Die Fischbecken der äußeren Reihen 1100, 1400 weisen ebenfalls eine Öffnung 1110, 1410 auf, die im Bodenbereich des Fischaufenthaltsbereichs ausgebildet ist, die über eine Rohrleitung 1120, 1420 mit Öffnungen 1130, 1430 verbunden sind, die wiederum zum Mittelgang 1250 hin ausgebildet sind, in dem der Abfischwagen 1500 verschiebbar gelagert ist. Die Rohrleitungen 1120, 1420 verlaufen hierbei teilweise unterhalb des Bodenbereichs des Fischaufenthaltsbereichs der Fischbecken der Fischreihen 1200, 1300.

Die Öffnungen 1130, 1430 horizontal benachbart zu den Öffnungen 1230, 1330 der Fischbecken der Reihen 1200 und 1300 und sind auf einer übereinstimmenden Höhe mit diesen Öffnungen 1230, 1330 angeordnet. Hierdurch kann ein Abfischrohrleitungsanschluss, der am Abfischwagen 1500 ausgebildet ist und mit diesem horizontal verschoben werden kann, jeweils in dem Bereich der jeweiligen Öffnung desjenigen Beckens verschoben werden, welches abgefischt werden soll. Der Abfischwagen 1500 weist hierzu insbesondere zu beiden Seiten hin solche Abfischanschlussleitungen (nicht gezeigt) auf, um die Öffnungen aller vier Fischbeckenreihen daran anschließen zu können.

Durch die Erfindung wird nach einem bevorzugten Ausführungsbeispiel eine umweltschonende Indoor-Fishfarm bereitgestellt. Prinzipiell besteht diese Indoor-Fishfarm aus einem Gebäude, in dem sich Becken zur Mast oder Zucht aquatischer Organismen befinden, sowie eine Aufbereitungseinheit für das Haltungs- und Ablaufwasser. Für die Indoor-Fishfarm wird das sog. »Innere Reinigungssystem« mit integrierter Haltungseinheit, biologischer Aufbereitung des Haltungswassers und Sedimentation verwendet. Dem gegenüber stehen externe Reinigungssysteme, die das Haltungswasser in sog. Bioreaktoren außerhalb des Fischeckens biologisch aufbereiten.

Die Indoor-Fishfarm setzt sich aus einem bis mehreren Modulen zusammen und beinhaltet folgende technische Bauteile:
- Fischbecken (inkl. Bioreaktor u. Sedimentation)
- Luftleitungsverbundnetz
- Ablaufwasserverbundnetz
- Prozessluftverdichter
- Fütterungseinheiten
- Ablaufwasseraufbereitungssystem
- Fischgüllebehälter
- Steuerung und Überwachung

Das Fischbecken ist prinzipiell dreiteilig aufgebaut. Es besteht aus einem Fischteil (oder Fischaufenthaltsbereich), einem Bioreaktor und einer Sedimentation. Der Fischteil, befindet sich mittig angeordnet, zwischen Bioreaktor und Sedimentation. Sowohl Bioreaktor als auch die Sedimentation werden räumlich vom Fischteil jeweils durch eine Trennwand abgegrenzt. Durch in diese Trennwände eingelassene Siebe besteht eine Verbindung, zwischen den Einheiten und dem gesamten Wasserkörper. Funktionell ist jeder Teil jedoch als eigene Einheit zu betrachten, dem eine spezifische Rolle zukommt:

Der Fischteil stellt die Haltungseinheit für die Fische dar. Um den Fischen optimale Lebensbedingungen zu bieten, muss das Wasser (zur Gleichverteilung von gelösten Stoffen wie z. B. Sauerstoff) umgewälzt und aufgereinigt werden. Unterhalb der Biopackung, die sich im Bioreaktor befindet, werden über ein spezielles Lüftersystem, große Mengen an Luft eingeströmt, wodurch die Wassersäule in der biologischen Reinigungsstufe (Bioreaktor) angehoben wird. Durch das Anheben des Wassers wird im Bioreaktor ein Druck aufgebaut. In der Trennwand zwischen Bioreaktor und Fischteil befindet sich nahe der Wasseroberfläche ein Gitter. Der im Bioreaktor erzeugte Druck kann sich durch das Gitter ausbreiten wodurch an der Wasseroberfläche eine Strömung in Längsrichtung des Beckens erzeugt wird. Die Strömung, setzt sich in Richtung der Sedimentation fort und nimmt mit zunehmender Entfernung vom Bioreaktor ab. Die Strömungsstärke reicht aus, um Schwebeteilchen mit in Richtung der Trennwand zwischen Sedimentation und Fischteil zu transportieren. An der Trennwand der Sedimentation wird die Strömung in Richtung Beckenboden umgelenkt und von dort wieder zurück in Richtung Bioreaktor. Am Bioreaktor angekommen wird diese wieder in Richtung Wasseroberfläche gerichtet. Von hier aus wird sie wieder mit neuer Strömungsenergie versorgt, so dass der Kreislauf erneut beginnen kann und dementsprechend eine Kreisströmung im Becken vorliegt (Fig. 2).

Durch die oben beschriebenen Strömungsverhältnisse innerhalb des Beckens wird deutlich, dass die Strömung im Fischteil teilweise am Gitter der Sedimentation vorbei fließt und damit auch ein Teil der suspendierten Partikel keinen Eingang in die Sedimentation finden. Um die Anreicherung von Partikeln in die Sedimentation zu erhöhen, kann der Strömungsverlauf auch erfindungsgemäß in Richtung des Beckenbodens umgelenkt werden. Die Umlenkung wird durch Einsetzen einer zusätzlichen Schottwand, die parallel zur begrenzenden Schottwand zwischen Bioreaktor und Fischteil positioniert ist, erreicht. Am Boden dieser zusätzlichen Schottwand befindet sich ein Gitter, durch das die Strömung gelangt. Das Wasser fließt aus dem Bioreaktor durch das oberflächennahe Gittersystem der ersten Schottwand, prallt gegen die zusätzliche Schottwand und wird so in Richtung des Beckenbodens umgelenkt. Von hier aus wird es in Richtung Sedimentation gerichtet, durchströmt den Fischteil in Bodennähe und findet durch das Gitter in der Trennwand direkten Eingang in die Sedimentation (Fig. 5).

Das Herzstück der Indoor-Fishfarm ist der Bioreaktor und die Belüftung. Im Bioreaktor wird der, während der Exkretion der Fische, anfallende Stickstoff des Ammoniums mittels Mikroorganismen über Nitrit zu Nitrat (Nitrifikation) oxidiert, ähnlich dem Ablauf in einem natürlichen Gewässer. Die Mikroorganismen siedeln sich auf dem Trägermaterial des Festbettreaktors an und bilden den sogenannten Biofilm. Die gesamte Einheit des Trägermaterials wird als Biopackung bezeichnet. Durch die biologische Aufbereitung des Produktionswassers werden den Fischen so optimale Wachstumsbedingungen geboten und auch die Mikroorganismen mit Sauerstoff versorgt.

Kreislaufanlagen sind keine vollständig geschlossenen Systeme. Um Anreicherungseffekten bestimmter Substanzen (wie z. B. Nitrat) entgegenzuwirken und somit optimale Wasserbedingungen für die Fische zu liefern, wird aus dem Becken eine definierte Wassermenge entfernt und durch Frischwasser ersetzt. Die Wassererneuerungsrate liegt inklusive der Verdunstung bei fünf bis zehn Prozent pro Tag. Die tägliche Wasserentnahme ist vornehmlich auf den Austrag von Schlamm, der durch Fischkot und ungenutztes Futter entsteht, zurückzuführen. Schwebeteilchen werden durch die, ausgehend vom Bioreaktor nahe der Wasseroberfläche erzeugten Strömung, im Fischteil in Schwebe gehalten. Der Fischkot und die Futterreste gelangen aus dem Fischteil durch Sogwirkung über ein am Boden des Fischteils befindliches Gitter in die Sedimentation. Dieser Sog wird durch eine Mammutpumpe erzeugt, die Wasser aus der Sedimentation in einen Bypass pumpt. Der Bypass dient der Verbindung und dem Wasseraustausch zwischen den angrenzenden Becken. Der Kot und die Nahrungsreste lagern sich in den Trichtern dieser dritten Funktionseinheit ab und werden alle zwei Stunden automatisch aus den Sedimentationseinheiten durch Eintrag von Luft über Mammutpumpen pneumatisch aus den Trichtern in ein System zur Ablaufwasseraufbereitung überführt. Aus diesem System wird die sedimentierte Fischgülle in einen großen Lagerbehälter gepumpt und kann anschließend als Dünger auf das Land ausgebracht werden. Beim Durchlauf des Ablaufwassers durch eine aerobe und anaerobe biologische Kammer entsteht aufgereinigtes Wasser, welches in einen Vorfluter bzw. Schönungsteich eingeleitet oder in die öffentliche Kanalisation ablaufen kann.

Die Prozessluftversorgung erfolgt über Drehkolbenverdichter, die sich im Technikraum befinden. Je nach Anlagengröße übernehmen mindestens ein oder mehrere Drehkolbenverdichter die Grundlast. Ein Verdichter mit gleicher Leistung steht im Stand-by-Betrieb zur Verfügung, um bei einem eventuellen Maschinenausfall die Anlage mit Luft zu versorgen. Die gesamte Produktionssteuerung, - kontrolle und -dokumentation mit voreingestellten Betriebsparametern, eingebautem Alarmsystem und Produktionsvergleichen erfolgt mittels eines Computerprogramms.

## Patentansprüche

1. Indoor-Fischbecken, umfassend
- Wände (16-18, 26, 27, 36-38) und Böden (15, 25, 35), welche einen Beckenbehälter definieren, in dem
- ein Fischaufenthaltsbereich (20),
- ein Sedimentationsbereich (30), der über zumindest eine Öffnung mit dem Fischaufenthaltsbereich so verbunden ist, dass Wasser, insbesondere Wasser aus einem bodennahen Bereich aus dem Fischaufenthaltsbereich in den Sedimentationsbereich strömen kann,
- ein Bioreaktorbereich (10), der über zumindest eine Öffnung (12) mit dem Fischaufenthaltsbereich so verbunden ist, dass Wasser, insbesondere Wasser aus einem oberflächennahen Bereich aus dem Bioreaktorbereich in den Fischaufenthaltsbereich strömen kann,
ausgebildet ist,
**gekennzeichnet durch** eine Rahmenkonstruktion (40-42, 50-56),
- welche eine Bodenaufstandsfläche (60) definiert, auf der die Rahmenkonstruktion aufliegt und die so mit den Wänden und Böden gekoppelt ist, dass zumindest der Boden (25) des Fischaufenthaltsbereich, vorzugsweise auch die Böden (15, 35) von Sedimentationsbereich und Reaktorbereich oberhalb der Bodenaufstandsfläche (60) liegt / liegen, und
- die aus einer Vielzahl von Streben besteht, welche an der Außenfläche der Wände und Böden anliegen und diese gegen den statischen Druck eines innerhalb des Beckenbehälters enthaltenen Wasservolumens abstützen.

2. Indoor-Fischbecken nach Anspruch 1,
**dadurch gekennzeichnet, dass** in einer den Fischaufenthaltsbereich begrenzenden Wand eine verschließbare Öffnung (210) ausgebildet ist, die auf der zum Beckenbehälter außen liegenden Seite vorzugsweise einen Anschluss für eine Abfischleitung aufweist.

3. Indoor-Fischbecken nach einem der vorhergehenden Ansprüche,
**dadurch gekennzeichnet, dass** der Bioreaktorbereich, der Fischaufenthaltsbereich und der Sedimentationsbereich in dieser Reihenfolge strömungstechnisch hintereinander angeordnet sind und vorzugsweise der Fischaufenthaltsbereich geometrisch zwischen dem Bioreaktorbereich und dem Sedimentationsbereich angeordnet ist.

4. Indoor-Fischbecken nach einem der vorhergehenden Ansprüche,
**dadurch gekennzeichnet, dass** zwischen dem Bioreaktorbereich (1010) und dem Fischaufenthaltsbereich (1020) ein Strömungsschacht (1090) ausgebildet ist, der vom Bioreaktorbereich mittels einer ersten Schottwand (1070) abgetrennt ist, die eine Öffnung (1071) im oberen Bereich aufweist und der vom Fischaufenthaltsbereich mittels einer zweiten Schottwand (1080) abgetrennt ist, die eine Öffnung (1081) unterhalb des oberen Bereichs, vorzugsweise im unteren Bereich, aufweist, deren untere Begrenzungskante vorzugsweise auf der Ebene des Bodens des Fischaufenthaltsbereich liegt.

5. Indoor-Fischbeckenanordnung, umfassend:
- mindestens ein Paar von Fischbecken nach einem der vorhergehenden Ansprüche, welche so zueinander angeordnet sind, dass die einander zugewandten Wände der Fischaufenthaltsbereiche der beiden Fischbecken einen zwischen den Fischbecken angeordneten Zwischenraum begrenzen, und
- eine artungslauffläche, welche im Zwischenraum auf einer solchen Höhe angeordnet ist, dass eine auf der Wartungslauffläche stehende Person von oben in den Fischaufenthaltsbereich greifen kann.

6. Indoor-Fischbeckenanordnung nach Anspruch 5, umfassend:
- eine Mehrzahl von Fischbecken-Paaren, die so zueinander angeordnet sind, dass die Zwischenräume (150, 350) der Fischbecken-Paare einen Wartungsgang ausbilden, und
- einen durch die Wartungslaufflächen gebildeten Wartungslaufgang (160, 360).

7. Indoor-Fischbeckenanordnung nach Anspruch 6, umfassend:
- einen Abfischwagen (500, 1500), der in Längsrichtung des Wartungslaufgangs verschieblich gelagert ist und der einen Behälter zur Aufnahme von Fischen aufweist, der vorzugsweise mittels einer Abfischleitung mit einer Abfischöffnung eines Fischbeckens verbindbar ist.

8. Indoor-Fischbeckenanordnung nach Anspruch 6 oder 7,
**gekennzeichnet durch** einen Abfischwagen (500), der in Längsrichtung des Wartungslaufgangs auf Schienen (530, 540) verschieblich gelagert ist, die vorzugsweise an der Rahmenkonstruktion der Fischbecken befestigt sind.

9. Indoor-Fischbeckenanordnung nach Anspruch 7 oder 8,
**dadurch gekennzeichnet, dass** der Abfischwagen in dem durch die Zwischenräume gebildeten Bereich verschieblich gelagert ist.

10. Indoor-Fischbeckenanordnung nach Anspruch 7 oder 8,
**dadurch gekennzeichnet, dass** der Abfischwagen in einem den Zwischenräumen in Bezug auf die Fischbecken gegenüberliegenden Bereich (250) verschieblich gelagert ist.

11. Indoor-Fischbeckenanordnung nach einem der vorhergehenden Ansprüche 8-10,
**dadurch gekennzeichnet, dass** in einer Wand, welche den Fischaufenthaltsbereich zum Bereich, in dem der Abfischwagen verschieblich gelagert ist, begrenzt, jedes Fischbeckens eine verschließbare Öffnung (210, 310) aufweist, die auf der zum Abfischwagen weisenden Seite vorzugsweise einen Anschluss für eine Abfischleitung aufweist, wobei die Öffnungen vorzugsweise in Bezug auf die Bodenaufstandsfläche auf der gleichen Höhe liegen.

12. Indoor-Fischbeckenanordnung nach Anspruch 9 oder 10,
**dadurch gekennzeichnet, dass** die Wand, die den Fischaufenthaltsbereich eines ersten Fischbeckens zu dem Bereich, in dem der Abfischwagen verschieblich gelagert ist, begrenzt,
- eine erste verschließbare Öffnung (210, 1230; 310, 1330) aufweist, die auf der zum Abfischwagen weisenden Seite einen Anschluss für eine Abfischleitung aufweist und die in den Fischaufenthaltsbereich des ersten Fischbeckens mündet, und
- eine zweite verschließbare Öffnung (130, 1130; 430, 1430) aufweist, die auf der zum Abfischwagen weisenden Seite einen Anschluss für eine Abfischleitung aufweist, die über eine Rohrleitung (120, 420, 1120, 1420) in den Fischaufenthaltsbereich eines zweiten Fischbeckens mündet,
wobei das erste Fischbecken zwischen dem zweiten Fisch becken und dem Bereich, in dem der Abfischwagen verschieblich gelagert ist, angeordnet ist und vorzugsweise die erste und zweite Öffnung in Bezug auf die Bodenaufstandsfläche auf der gleichen Höhe liegen.

13. Indoor-Fischbeckenanordnung nach einem der vorhergehenden Ansprüche 7, 8 oder 10-12,
**gekennzeichnet durch** vier sich parallel nebeneinander erstreckende, horizontal benachbarte Reihen (100, 200, 300, 400) von Fischbecken, wobei zwischen der ersten und zweiten sowie der dritten und vierten benachbarten Reihe ein Wartungsgang (150; 350) ausgebildet ist und zwischen der zweiten und dritten Reihe ein Bereich (250), in dem der Abfischwagen (500) verschieblich gelagert ist, angeordnet ist,
und **durch** eine Mehrzahl von Öffnungen (1130, 1230, 1330, 1430) zum Anschluss einer Abfischleitung in den Wänden, die zum Bereich (250), in dem der Abfischwagen verschieblich gelagert ist, weisen, angeordnet sind, wobei jedem Fischbecken eine Öffnung zugeordnet ist und die Öffnungen vorzugsweise horizontal auf einer Höhe angeordnet sind.

14. Indoor-Fischbeckenanordnung nach einem der vorhergehenden Ansprüche 5-13, mit einer Mehrzahl von Fischbecken nach Anspruch 3,
**dadurch gekennzeichnet, dass** die Fischbecken in zumindest einer Reihe angeordnet sind, wobei benachbarte Fischbecken in der Reihe so einander zugeordnet sind, dass der Wasserablauf aus dem Sedimentationsbereich eines Beckens in den Wasserzulauf eines Bioreaktorbereichs eines benachbarten Beckens mündet, und vorzugsweise der Sedimentationsbereich eines Beckens an den Bioreaktorbereich eines benachbarten Beckens grenzt.

15. Indoor-Fischbeckenanordnung nach dem vorhergehenden Anspruch,
**dadurch gekennzeichnet, dass** die Fischbecken in zumindest zwei Reihen angeordnet sind und ein Wasserkreislauf durch die Fischbecken der zumindest zwei Reihen ausgebildet ist, wobei zumindest zwei Paare einander gegenüberliegender Fischbecken so einander zugeordnet sind,
- dass der Wasserablauf aus dem Sedimentationsbereich eines Beckens einer ersten Reihe in den Wasserzulauf eines Bioreaktorbereichs eines Beckens einer benachbarten Reihe mündet, und
- dass vorzugsweise der Wasserablauf des Sedimentationsbereichs eines Beckens der benachbarten Reihe in den Wasserzulauf des Bioreaktorbereichs eines Beckens der ersten Reihe mündet.

## Claims

1. Indoor fish tank, comprising
- walls (16-18, 26, 27, 36-38) and bases (15, 25, 35) which define a tank container, in which there is formed
- a fish dwelling area (20).
- a sedimentation area (30) which is connected to the fish dwelling area via at least one opening in such a way that water, in particular water from an area close to the base, can flow from the fish dwelling area into the sedimentation area,
- a bioreactor area (10) which is connected to the fish dwelling area via at least one opening (12) in such a way that water, in particular water from an area close to the surface, can flow from the bioreactor area into the fish dwelling area,
**characterized by** a frame construction (40-42, 50-56)
- which defines a base standing surface (60) on which the frame constriction rests and which is coupled to the walls and bases in such a way that at least the base (25) of the fish dwelling area, preferably also the bases (15, 35) of the sedimentation area and reactor area, lie (s) above the base standing surface (60), and
- which consists of a plurality of struts which bear against the outer face of the walls and bases and support these against the static pressure of a water volume contained inside the tank container.

2. Indoor fish tank according to claim 1, **characterized in that** a closable opening (210) is formed in a wall delimiting the fish dwelling area, which closable opening preferably has on the outer side in relation to the tank container a connection for a fish removal line.

3. Indoor fish tank according to any of the preceding claims, **characterized in that** the bioreactor area, the fish dwelling area and the sedimentation area are arranged in this sequence one behind the other in flow terms and preferably the fish dwelling area is arranged geometrically between the bioreactor area and the sedimentation area.

4. Indoor fish tank according to any of the preceding claims, **characterized in that** a flow shaft (1090) is formed between the bioreactor area (1010) and the fish dwelling area (1020), which flow shaft is separated from the bioreactor area by means of a first partition wall (1070) having an opening (1071) in the top region and is separated from the fish dwelling area by means of a second partition wall (1080) having an opening (1081) below the top region, preferably in the bottom region, the lower boundary edge of said opening preferably lying on the plane of the base of the fish dwelling area.

5. Indoor fish tank arrangement, comprising:
- at least one pair of fish tanks according to any of the preceding claims, which are arranged relative to one another in such a way that the mutually facing walls of the fish dwelling areas of the two fish tanks delimit an intermediate space arranged between the fish tanks, and
- a maintenance step which is arranged in the intermediate space at such a height that a person standing on the maintenance step can reach into the fish dwelling area from above .

6. Indoor fish tank arrangement according to claim 5, comprising:
- a plurality of fish tank pairs which are arranged relative to one another in such a way that the intermediate spaces (150, 350) of the fish tank pairs form a maintenance passage, and
- a maintenance walkway (160, 360) formed by the maintenance steps.

7. Indoor fish tank arrangement according to claim 6, comprising:
- a fish removal carriage (500, 1500) which is mounted such as to be able to be displaced in the longitudinal direction of the maintenance walkway and which has a container for holding fish, which container can preferably be connected by means of a fish removal line to a fish removal opening of a fish tank.

8. Indoor fish tank arrangement according to claim 6 or 7, **characterized by** a fish removal carriage (500) which is mounted so as to be able to be displaced on rails (530, 540) in the longitudinal direction of the maintenance walkway, which rails are preferably fastened two the frame construction of the fish tanks.

9. Indoor fish tank arrangement according to claim 7 or 8, **characterized in that** the fish removal carriage is amounted such as to be able to be displaced in the area formed by the intermediate spaces.

10. Indoor fish tank arrangement according to claim 7 or 8, **characterized in that** the fish removal carriage is mounted such as to be able to be displaced in an area (250) arranged opposite the intermediate spaces in relation to the fish tanks.

11. Indoor fish tank arrangement according to any of the preceding claims 8 to 10, **characterized in that**, in a wall which delimits the fish dwelling area from the area in which the fish removal carriage is displaceably mounted, each fish tank has a closable opening (210, 310) which has on the side facing towards the fish removal carriage preferably a connection for a fish removal line, wherein the openings preferably lie at the same height relative to the base standing surface.

12. Indoor fish tank arrangement according to claim 9 or 10, **characterized in that** the wall which delimits the fish dwelling area of a first fish tank from the area in which the fish removal carriage is displaceably mounted has
- a first closable opening (210, 1230; 310, 1330) which has on the side facing towards the fish removal carriage a connection for a fish removal line and which opens into the fish dwelling area of the first fish tank, and
- a second closable opening (130, 1130; 430, 1430) which has on the side facing towards the fish removal carriage a connection for a fish removal line and which opens via a pipeline (120, 420, 1120, 1420) into the fish dwelling area of a second fish tank,
wherein the first fish tank is arranged between the second fish tank and the area in which the fish removal carriage is displaceably amounted, and preferably the first and second opening lie at the same height relative to the base standing surface.

13. Indoor fish tank arrangement according to any of the preceding claims 7, 8 or 10 to 12, **characterized by** four horizontally adjacent rows (100, 200, 300, 400) of fish tanks expending in parallel next to one another, wherein a maintenance passage (150; 350) is formed between the first and second and between the third and fourth adjacent rows and an area (250) in which the fish removal carriage (500) is displaceably mounted is arranged between the second and third rows, and by a plurality of openings (1130, 1230, 1330, 1430) for connecting a fish removal line in the walls which face towards the area (250) in which the fish removal carriage is displaceably mounted, wherein one opening is assigned to each fish tank and the openings are preferably arranged horizontally at one height.

14. Indoor fish tank arrangement according to any of the preceding claims 5 to 13, comprising a plurality of fish tanks according to claim 3, **characterized in that** the fish tanks are arranged in at least one row, wherein adjacent fish tanks in the row are associated with one another in such a way that the water drain from the sedimentation area of one tank opens into the water inlet of a bioreactor area of an adjacent tank, and preferably the sedimentation area of one tank adjoins the bioreactor area of an adjacent tank.

15. Indoor fish tank arrangement according to the preceding claim, **characterized in that** the fish tanks are arranged in at least two rows and a water circulation is formed by the fish tanks of the at least two rows, wherein at least two pairs of fish tanks located opposite one another are associated with one another in such a way
- that the water drain from the sedimentation area of one tank of a first row opens into the water inlet of a bioreactor area of one tank of an adjacent row, and
- that preferably the water drain from the sedimentation area of one tank of the adjacent row opens into the water inlet of the bioreactor area of one tank of the first row.

## Revendications

1. Bassin piscicole couvert, comprenait
- des parois (16-18, 26, 27, 36-38) et des fonds (15, 25, 35) qui définissant un contenant formant un bassin, dans lequel
- une zone de séjour des poissons (20),
- une zone de sédimentation (30) qui est reliée par au moins une ouverture, à la zone de séjour des poissons de telle sorte que de l'eau, en particulier de l'eau d'une zone proche du sol peut s'écouler de la zone de séjour des poissons dans la zone de sédimentation,
- une zone de bioréacteur (10) qui est reliée par au moins une ouverture (12) à la zone de séjour des poissons de telle sorte que de l'eau, en particulier, de l'eau d'une zone proche de la surface peut s'écouler de la zone du bioréacteur dans la zone de séjour des poissons,
est formée,
**caractérisé par** une constriction cadre (40 à 42, 50 à 56)
- qui définit une surface au sol (60) sur laquelle la construction cadre repose et qui est couplée avec les parois et les fonds de telle sorte qu'au moins le fond (25) de la zone de séjour des poissons, de préférence également les fonds (15, 35) de la zone de sédimentation et la zone de réacteur se situe(nt) au-dessus de la surface au sol (60), et
- qui consiste en une multiplicité d'entretoises qui reposent sur la surface externe des parois et des sols et soutiennent ceux-ci contre la pression statique d'un volume d'eau contenu à l'intérieur du contenant format un bassin.

2. Bassin piscicole couvert selon la revendication 1,
**caractérisé en ce que**, dans une paroi limitant la zone de séjour des poissons, est formée une ouverture (210) qui peut être fermée, qui présente sur le côté extérieur du contentant formant un bassin, de préférence, un raccordement pour un conduit d'évacuation des poissons.

3. Bassin piscicole couvert selon l'une des revendications précédentes,
**caractérisé en ce que** la zone de bioréacteur, la zone de séjour des poissons et la zone de sédimentation sont disposées dans cet ordre consécutivement d'un point de vue hydrodynamique et de préférence, la zone de séjour des poissons est disposée géométriquement entre la zone de bioréacteur et la zone de sédimentation.

4. Bassin piscicole couvert selon l'une des revendications précédentes,
**caractérisé en ce que**, entre la zone de bioréacteur (1010) et la zone de séjour des poissons (1020) est formé un bac d'écoulement (1050) qui est séparé de la zone de bioréacteur au moyen d'une première cloison (1070) qui présente une ouverture (1071) dans la zone supérieure et qui est séparé de la zone de séjour des poissons au moyen d'une deuxième paroi (1080) qui présente une ouverture (1081) sous la zone supérieure, de préférence, dans la zone inférieure dont le bord de délimitation inférieur se situe de préférence sur le plan du fond de la zone de séjour des poissons.

5. Installation de bassin piscicole couvert, comprenant
- au moins une paire de bassins piscicoles selon l'une des revendications précédentes qui sont disposés l'un par rapport à l'autre de telle sorte que les parois qui se font face des zones de séjour des poissons des deux bassins piscicoles délimitent un espace intermédiaire disposé entre les bassins piscicoles et
- une surface de voies d'entretien qui est disposée dans l'espace intermédiaire sur une hauteur telle qu'une personne se trouvant sur la surface de voies d'entretien peut intervenir du haut dans la zone de séjour des poissons.

6. Installation de bassin piscicole couvert selon la revendication 5, comprenant :
- une multiplicité de paires de bassins piscicoles qui sont disposées les unes par rapport aux autres de telle sorte que les espaces intermédiaires (150, 350) des paires de bassins piscicoles forment une voie d'entretien, et
- une passerelle d'entretien (160, 360) formée par les surfaces de voies d'entretien.

7. Installation de bassin piscicole couvert selon la revendication 6, comprenant :
- un chariot d'évacuation des poissons (500, 1500) qui est logé de façon à coulisser dans la direction longitudinale de la passerelle d'entretien et qui présente une conteneur pour la réception des poissons qui peut être relié de préférence au moyen d'un conduit d'évacuation des poissons à une ouverture d'évacuation des poissons d'un bassin piscicole.

8. Installation de bassin piscicole couvert selon la revendication 6 ou 7,
**caractérisée par** un chariot d'évacuation des poissons (500) qui est logé de façon à coulisser dans la direction longitudinale de la passerelle d'entretien sur des rails (530, 540) qui sont fixés de préférence sur la construction cadre du bassin piscicole.

9. Installation de bassin piscicole couvert selon la revendication 7 ou 8,
**caractérisée en ce que** le chariot d'évacuation des poissons est logé de façon à coulisser dans la zone formée par les espaces intermédiaire.

10. Installation de bassin piscicole couvert selon la revendication 7 ou 8,
**caractérisée en ce que** le chariot d'évacuation des poissons est logé de façon à coulisser dans une zone (250) opposée aux espaces intermédiaires par rapport aux bassins piscicoles.

11. Installation de bassin piscicole couvert selon l'une des revendications 8 à 10 précédentes,
**caractérisée en ce que**, dans une paroi qui délimite la zone de séjour des poissons vers la zone dans laquelle est logé de façon à coulisser le chariot d'évacuation des poissons, chaque bassin piscicole présente une ouverture (210, 310) qui peut être fermée qui présente sur le côté tourné vers le chariot d'évacuation des poissons, de préférence, un raccordement pour un conduit d'évacuation des patients, les ouvertures se trouvant de préférence à la même hauteur par rapport à la surface au sol.

12. Installation de bassin piscicole couvert selon la revendication 9 ou 10,
**caractérisée en ce que** la paroi qui délimite la zone de séjour des poissons d'un premier bassin piscicole vers la zone dans laquelle est logé de façon à coulisser le chariot d'évacuation des poissons,
- présente une première ouverture (210, 1230 ; 310, 1330) qui peut être fermée, qui présente sur le côté tourné vers le chariot d'évacuation des poissons, un raccord pour un conduit d'évacuation des poissons et qui débouche dans la zone de séjour des poissons du premier bassin piscicole, et
- présente une deuxième ouverture (130, 1130 ; 430, 1430) qui peut être fermée, qui présente sur le côté tourné vers le chariot d'évacuation des poissons, un raccord pour un conduit d'évacuation des poissons qui débouche par un tuyau (120, 420, 1120, 1420) dans la zone de séjour des poissons d'un deuxième bassin piscicole,
le premier bassin piscicole étant disposé entre le deuxième bassin piscicole et la zone dans laquelle le chariot d'évacuation des poissons est logé de façon à coulisser et de préférence, la première et la deuxième ouvertures se trouvent à la même hauteur par rapport à la surface au sol.

13. Installation de bassin piscicole couvert selon l'une des revendications 7, 8 ou 10 à 12 précédentes,
**caractérisée par** quatre rangées (100, 200, 300, 400) de bassins piscicoles voisines horizontalement, s'étendant parallèlement côte à côte, une voie d'entretien (150 ; 350) étant formée entre les première et deuxième rangées et entre les troisième et quatrième rangées voisines, et entre les deuxième et troisième rangées est disposée une zone (250) dans laquelle le chariot d'évacuation des poissons (500) est logé de façon à coulisser,
et par une multiplicité d'ouvertures (1130, 1230, 1330, 1430) pour le raccordement d'un conduit d'évacuation des poissons, dans les parois qui sont tournées vers la zone (250) dans laquelle le chariot d'évacuation des poissons est logé de façon à coulisser, une ouverture étant affectée à chaque bassin piscicole et les ouvertures étant disposées de préférence horizontalement sur une hauteur.

14. Installation de bassin piscicole couvert selon l'une des revendications 5 à 13 précédentes, comportant une multiplicité de bassins piscicoles selon la revendication 3,
**caractérisée en ce que** les bassins piscicoles sont disposés dans au moins une rangée, des bassins piscicoles voisins dans la rangée étant disposés de telle sorte l'un par rapport à l'autre que l'écoulement de l'eau de la zone de sédimentation d'un bassin débouche dans l'arrivée d'eau d'une zone de bioréacteur d'un bassin voisin et de préférence la zone de sédimentation d'un bassin jouxte la zone de bioréacteur d'un bassin voisin.

15. Installation de bassin piscicole couvert selon l'une des revendications précédentes,
**caractérisée en ce que** les bassins piscicoles sont disposés dans au moins deux rangées et un circuit d'eau est formé dans les bassins piscicoles des au moins deux rangées, au moins deux paires de bassins piscicoles face à face étant disposées de telle sorte que
- l'écoulement d'eau de la zone de sédimentation d'un bassin d'une première rangée débouche dans l'arrivée d'eau d'une zone de bioréacteur d'un bassin d'une rangée voisine, et
- de préférence l'écoulement d'eau de la zone de sédimentation d'un bassin de la rangée voisine débouche dans l'arrivée d'eau de la zone de bioréacteur d'un bassin de la première rangée.
